# EUROPÄISCHE PATENTSCHRIFT

(11) **EP 2 640 939 B1**
(45) Veröffentlichungstag und Bekanntmachung des Hinweises auf die Patenterteilung: **12.10.2016**
(21) Anmeldenummer: 11770782.8
(22) Anmeldetag: 19.10.2011
(51) Int. Cl.: F01N 3/022, F01N 3/023, F01N 3/033, F01N 3/10, F01N 3/021, F01N 3/027, F01N 13/00, F01N 3/01

(54) **VORRICHTUNG ZUR BEHANDLUNG VON RUßPARTIKEL ENTHALTENDEM ABGAS**
DEVICE FOR TREATING EXHAUST GAS CONTAINING SOOT PARTICLES
DISPOSITIF PERMETTANT LE TRAITEMENT DES GAZ D'ÉCHAPPEMENT CONTENANT DES PARTICULES DE SUIE

(30) Priorität: 17.11.2010 DE 102010051655
(43) Veröffentlichungstag der Anmeldung: 25.09.2013
(73) Patentinhaber: Continental Automotive GmbH, 30165 Hannover (DE)
(72) Erfinder: HODGSON, Jan, 53840 Troisdorf (DE); BRÜCK, Rolf, 51429 Bergisch Gladbach (DE); VORSMANN, Christian, 51105 Köln (DE)
(86) Internationale Anmeldenummer: PCT/EP2011/068222
(87) Internationale Veröffentlichungsnummer: WO 2012/065800

(56) Entgegenhaltungen:
- EP-A1- 1 840 938
- WO-A1-01/92692
- WO-A1-2007/014650
- WO-A1-2010/057779
- WO-A1-2010/145931
- DE-U1- 20 122 703
- JP-A- 2003 172 123

## Beschreibung

Die vorliegende Erfindung betrifft eine Vorrichtung zur Behandlung von Rußpartikel enthaltendem Abgas, insbesondere mit einem sogenannten elektrostatischen Filter bzw. Elektrofilter und einer Agglomerationseinrichtung. Die Erfindung findet insbesondere Anwendung bei der Behandlung von Abgasen mobiler Verbrennungskraftmaschinen im Kraftfahrzeugbereich, insbesondere bei der Behandlung von Abgasen resultierend aus Diesel-Kraftstoff.

Bei Kraftfahrzeugen mit mobilen Verbrennungskraftmaschinen und insbesondere bei Kraftfahrzeugen mit einem Dieselmotor sind regelmäßig erhöhte Mengen Rußpartikel in dem Abgas enthalten, welche nicht in die Umwelt abgegeben werden sollen. Dies ist durch entsprechende Abgasverordnungen vorgegeben, die Grenzwerte für die Anzahl und die Masse an Rußpartikeln pro Abgasgewicht oder Abgasvolumen sowie teilweise auch für ein gesamtes Kraftfahrzeug vorgeben. Rußpartikel sind insbesondere nicht verbrannte Kohlenstoffe und Kohlenwasserstoffe im Abgas.

Es sind bereits eine Vielzahl unterschiedlicher Konzepte zur Beseitigung von Rußpartikeln aus Abgasen mobiler Verbrennungskraftmaschinen diskutiert worden. Neben wechselseitig geschlossenen Wandstromfiltern, offenen Nebenstromfiltern, Schwerkraftabscheidern etc. sind auch bereits Systeme vorgeschlagen worden, bei denen die Partikel im Abgas elektrisch aufgeladen und dann mit Hilfe elektrostatischer Anziehungskräfte abgelagert werden. Diese Systeme sind insbesondere unter der Bezeichnung "elektrostatischer Filter" bzw. "Elektrofilter" bekannt.

Bei "Elektrofiltern" wird durch die Bereitstellung eines elektrischen Feldes und/oder eines Plasmas eine Agglomeration von kleinen Rußpartikeln zu größeren Rußpartikeln und/oder eine elektrische Ladung bei Rußpartikeln bewirkt. Elektrisch geladene Rußpartikel und/oder größere Rußpartikel sind regelmäßig in einem Filtersystem deutlich einfach abzuscheiden. Rußpartikel-Agglomerate werden aufgrund ihrer größeren Massenträgheit in einer Abgasströmung träger transportiert und lagern sich an Umlenkstellen einer Abgasströmung somit einfacher ab. Elektrisch geladene Rußpartikel werden aufgrund ihrer Ladung hin zu Oberflächen gezogen, an welchen sie anlagern und ihre Ladung abgeben. Auch dies erleichtert die Entfernung von Rußpartikeln aus dem Abgasstrom im Betrieb von Kraftfahrzeugen.

So werden für solche Elektrofilter regelmäßig mehrere Sprühelektroden und Kollektorelektroden vorgeschlagen, die in der Abgasleitung positioniert werden. Dabei werden bspw. eine zentrale Sprühelektrode, welche etwa mittig durch die Abgasleitung verläuft, und eine umgebende Mantelfläche der Abgasleitung als Kollektorelektrode dazu genutzt, einen Kondensator auszubilden. Mit dieser Anordnung von Sprühelektrode und der Kollektorelektrode wird quer zur Strömungsrichtung des Abgases ein elektrisches Feld gebildet, wobei die Sprühelektrode bspw. mit einer Hochspannung betrieben werden kann, die im Bereich von ca. 15 kV liegt. Hierdurch können sich insbesondere Corona-Entladungen ausbilden, durch welche die mit dem Abgas durch das elektrische Feld strömenden Partikel unipolar aufgeladen werden. Aufgrund dieser Aufladung wandern die Partikel durch die elektrostatischen Coulombkräfte zur Kollektorelektrode.

Neben Systemen, bei denen die Abgasleitung als Kollektorelektrode ausgeführt ist, sind auch Systeme bekannt, bei denen die Kollektorelektrode bspw. als Drahtgitter ausgebildet ist. Dabei erfolgt die Anlagerung von Partikeln an dem Drahtgitter zu dem Zweck, die Partikel ggf. mit weiteren Partikeln zusammenzuführen, um so eine Agglomeration zu realisieren. Das das Gitter durchströmende Abgas reißt dann die größeren Partikel wieder mit und führt sie klassischen Filtersystemen zu.

Bei der Regenerationen von Filtersystemen ist neben der intermittierenden Regeneration durch kurzzeitiges Aufheizen, das heißt Verbrennen des Rußes (katalytisch motivierte, oxidative Umsetzung), auch bekannt, Ruß mittels Stickstoffdioxid (NO₂) umzuwandeln. Der Vorteil der kontinuierlichen Regeneration mit Stickstoffdioxid ist, dass die Umwandlung von Ruß hier bereits bei deutlich tieferen Temperaturen (insbesondere kleiner 250 C) stattfinden kann. Aus diesem Grund ist die kontinuierliche Regeneration in vielen Anwendungsfällen bevorzugt. Das führt jedoch zu dem Problem, dass sichergestellt sein muss, dass das Stickstoffdioxid im Abgas mit den angelagerten Rußpartikeln in ausreichendem Umfang in Kontakt kommt.

Auch in diesem Zusammenhang ergeben sich technische Schwierigkeiten bei der Realisierung eines dauerhaften Betriebes solcher Abgasanlagen bei Kraftfahrzeugen, wobei die unterschiedlichen Belastungen der Verbrennungskraftmaschinen zu unterschiedlichen Abgasströmen, Abgaszusammensetzungen und/oder Temperaturen führen.

Darüber hinaus ist zu berücksichtigen, dass bei der Bereitstellung solcher Komponenten für ein solches Ruß-Abscheide-System möglichst einfache Komponenten eingesetzt werden sollen, insbesondere auch solche, die sich im Rahmen einer Serienfertigung kostengünstig herstellen lassen. Außerdem ist gerade beim Design der Elektroden zu berücksichtigen, dass diese ggf. ausgerichtet in der Abgasleitung positioniert sein müssen, insbesondere so, dass ein unerwünscht hoher Staudruck, bzw. eine unerwünschte Verwirbelung des Abgases im Bereich der Elektrode, nicht eintritt.

Auch wenn sich die oben beschriebenen Systeme bislang zumindest in Versuchen geeignet für die Behandlung von Rußpartikeln herausgestellt haben, stellt doch die Umsetzung dieses Konzepts für den Serienbetrieb bei Kraftfahrzeugen eine große Herausforderung dar. Dies gilt insbesondere hinsichtlich der stark schwankenden, zeitweilig sehr hohen Rußbelastung im Abgas sowie die Verminderung der Rußpartikelanzahl von Kleinstpartikeln mit einem Durchmesser im Mikrometer- bzw. subMikrometerbereich.

Die WO 01/92692 A1 und DE 201 22 703 U1 offenbaren jeweils eine teilweise offene Partikelfalle mit Strömungskanälen, in denen Strukturen angeordnet sind, die Verwirbelungs-, Beruhigungs- und/oder Totzonen erzeugen. Es wird dort beschrieben, dass durch die Abscheidewahrscheinlichkeit die Ionisation bzw. Polarisation von Partikeln im Abgas erhöht werden kann. Ein hierfür erforderlicher Plasmareaktor kann vor der Partikelfalle oder in Strömungsrichtung nach der Partikelfalle angeordnet sein.

Aus der WO 2007/014650 A1 ist eine Abgasnachbehandlungseinheit mit einem Oxidationskatalysator, einem SCR-Katalysator und einem Partikelabscheider bekannt. Es ist dort offenbart, dass der Partikelabscheider durch ein Plasma regeneriert werden kann. Zudem ist offenbart, dass die Partikel elektrostatisch im Abscheider aus dem Abgas entfernt werden können.

Die EP 1 840 938 A1 betrifft einen Plasmareaktor, der in Strömungsrichtung des Abgases hintereinander angeordnet eine positive Elektrode, einen Plasmareaktorkörper und einen elektrisch leitenden Wabenkörper umfasst. Mit einer Spannungsquelle kann eine Wechselspannung zwischen der positiven Elektrode und dem Wabenkörper angelegt werden. Auf diese Weise wird in dem Plasmareaktor ein Plasma erzeugt, das eine Reaktion der Abgasbestandteile miteinander unterstützt. Partikel im Abgas können anschließend im Wabenkörper abgeschieden werden.

Die JP 2003-172123 A offenbart eine Abgasnachbehandlungseinrichtung, bei der durch eine Elektrode ionisierte Rußpartikel an nachfolgenden Filterelementen niedergeschlagen und durch eine elektrische Barriereentladung umgesetzt werden. Die Vorrichtung umfasst eine Ionisierungselektrode, die in Abgasflussrichtung vor einem ersten Filterelement, einem zweiten Filterelement und vor einem dritten Filterelement angeordnet ist, wobei die Filterelemente im Vergleich zueinander eine kleiner werdende Porengröße in Richtung der Abgasströmung aufweisen. Hinter den Filterelementen ist jeweils eine Regenerationselektrode angebracht.

Aus WO 2010/057779 A1 ist eine Abgasreinigungsvorrichtung bekannt, die einen Radialwabenkörper und einen Partikelabscheider umfasst, wobei die Nutzung eines elektrischen Potentials nicht erwähnt wird.

In der WO 2010/145931 A1 ist eine Abgasbehandlungsvorrichtung beschrieben, bei der an eine Agglomerationseinrichtung ein elektrisches Potential anlegbar ist.

Hiervon ausgehend ist es Aufgabe der hier vorliegenden Erfindung, die im Zusammenhang mit dem Stand der Technik geschilderten Probleme zumindest teilweise zu lösen. Insbesondere soll eine Vorrichtung zur Behandlung von Rußpartikel enthaltendem Abgas angegeben werden, die eine hohe Abscheiderate für Rußpartikel erzielt und insbesondere auch Rußpartikel mit einer Größe von nur einigen hundert Nanometern und größer aus dem Abgas filtert.

Diese Aufgaben werden gelöst mit einer Vorrichtung gemäß den Merkmalen des Patentanspruchs 1. Weitere vorteilhafte Ausgestaltungen der Vorrichtung sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Die erfindungsgemäße Vorrichtung zur Behandlung von Rußpartikel enthaltendem Abgas umfasst zumindest
- mindestens ein Ionisierungselement zur Ionisierung von Rußpartikel,
- mindestens ein Filterelement, wobei an mindestens einem Abschnitt des Filterelements ein elektrisches Potential anlegbar ist,
- mindestens eine Agglomerationseinrichtung zur zumindest teilweisen Agglomeration elektrisch aufgeladener Rußpartikel, wobei die Agglomerationseinrichtung zwischen dem Ionisierungselement und dem Filterelement angeordnet ist und mindestens ein Außenrohr und mindestens ein Innenelement aufweist.

Die hier vorgeschlagene Vorrichtung kann insbesondere Teil einer Abgasanlage eines Kraftfahrzeugs sein, welches einen Diesel-Motor aufweist und ist insbesondere in einer Abgasleitung der Abgasanlage angeordnet. Demgemäß durchströmt das Rußpartikel enthaltende Abgas zunächst ein Ionisierungselement, das zumindest eine Elektrode umfasst, an die eine elektrische Hochspannung zwischen 3 kV [Kilovolt] und 50 kV, bevorzugt zwischen 5 kV und 25 kV, angelegt werden kann. Die Spannung wird insbesondere so eingestellt bzw. geregelt oder gesteuert, dass es zu einer Corona-Entladung zwischen der Elektrode und einer Gegenelektrode kommt. Das Ionisierungselement kann als einfache Sprühelektrode oder Stabelektrode gebildet sein, es ist aber bevorzugt, dass das Ionisierungselement einen Wabenkörper mit einer Mehrzahl von durchströmbaren Kanälen umfasst, an dessen Eintrittsbereich oder Austrittsbereich mindestens eine Elektrode angeordnet ist, die in bzw. gegen die Strömungsrichtung ausgerichtet sind. Der Wabenkörper kann insbesondere zumindest teilweise, bevorzugt vollständig, aus einem elektrisch leitfähigem Material gebildet sein, so dass ein elektrisches Potential an den Wabenkörper und/oder an die Elektroden angelegt werden kann.

Anschließend durchströmt das geladene Rußpartikel enthaltende Abgas die Agglomerationseinrichtung. Das Außenrohr der Agglomerationseinrichtung wird dabei als das die Abgasströmung nach außen begrenzende Element aufgefasst. Im Sinne der Erfindung kann das Außenrohr somit ein Teil der Abgasleitung, ein speziell der Agglomerationseinrichtung zugeordnetes Gehäuse und/oder ein weiteres, die Abgasströmung nach außen begrenzendes Element (z. B. nach Art einer umfangsbegrenzenden Hülle) sein. Das Außenrohr wird also nur auf seiner Innenseite vom Abgas durchströmt. Das Innenelement hingegen wird zumindest abschnittsweise von mehreren Seiten (insbesondere außen und innen) von dem Abgas umströmt. Insbesondere ist das Innenelement ausschließlich zur Befestigung mit dem Außenrohr verbunden. Bevorzugt ist eine Halterung vorgesehen, die das Innenelement in dem Außenrohr fixiert bzw. ausrichtet. Ferner ist bevorzugt, dass das Innenelement mit einem Abstand zu dem Außenrohr in diesem angeordnet ist, wobei der Abstand mindesten 1 cm [Zentimeter], bevorzugt mindestens 3 cm beträgt, wobei z. B. aus Stabilitätsgründen und/oder strömungstechnischen Gründen (insbesondere bei Kfz-Abgasanlagen) der Abstand vorteilhafter Weise nicht größer als 5 cm gewählt werden sollte. Das Innenelement wird bevorzugt vollständig, insbesondere von allen Seiten von dem Abgas umströmt, wobei ggf. Strömungsleitmittel vorgesehen sein können, die eine gezielte lokale und/oder gleichmäßige Umströmung veranlassen.

Bevorzugt weist die Agglomerationseinrichtung eine axiale Länge auf, die größer ist als die Hälfe der Distanz zwischen dem Ionisierungselement und dem Filterelement.

Die Agglomerationseinrichtung kann über den direkten Kontakt mit der Abgasleitung auf Masse gelegt sein. Es ist aber bevorzugt, dass die Agglomerationseinrichtung über einen elektrischen Anschluss auf ein definiertes elektrisches Potential gelegt werden kann, wobei in diesem Fall die Agglomerationseinrichtung gegenüber der Abgasleitung elektrisch isoliert angeordnet ist. Die Agglomerationsvorrichtung kann dazu innerhalb der Abgasleitung angeordnet sein oder ein Teil der Abgasleitung bilden, der in axialer Richtung gegenüber dem anderen Teil der Abgasleitung isoliert ist. Die Agglomerationseinrichtung stellt somit zumindest abschnittsweise die Gegenelektrode zur mindestens einen Elektrode des Ionisierungselements dar. Es ist ferner bevorzugt, dass das Außenrohr und das Innenelement unabhängig voneinander auf verschiedene elektrische Potentiale gelegt werden können.

Alternativ wird vorgeschlagen, dass die Agglomerationseinrichtung elektrisch isoliert in der Abgasanlage angeordnet ist, und dass kein elektrisches Potential an der Agglomerationseinrichtung von außen angelegt werden kann. Die von den Rußpartikeln getragenen Ladungen können somit nicht abgeführt werden. Gleichwohl kann die Agglomerationseinrichtung in diesem Fall weitere Funktionen erfüllen, um zusätzlich die Agglomeration zu begünstigen, wie z. B. Aufteilen von Abgasströmen und Zusammenführen von Abgasströmen, Umlenken von Abgasströmungen, Prallflächen für Abgasströmungen, etc.

Die elektrisch geladenen Rußpartikel lagern sich auf den von dem Abgas be strömten Oberflächen der Agglomerationseinrichtung ab und können hier mit weiteren Rußpartikeln agglomerieren, bevor sie von dem vorbeiströmenden Abgas mitgerissen werden. Die so in ihrem mittleren Durchmesser vergrößerten Rußpartikel gelangen im Folgenden zu dem Filterelement, das die Rußpartikel aus dem Abgasstrom filtert. Die Agglomeration der Rußpartikel kann hier auch durch einen direkten Kontakt der Rußpartikel im Flug durch die Agglomerationseinrichtung stattfinden, wobei hierfür geeignete Strömungsbedingungen geschaffen sind.

Das Filterelement ist bevorzugt als ein Oberflächenabscheider ausgeführt, der eine Mehrzahl von Kanälen aufweist, die für das Abgas durchströmbar sind und sich zwischen einem Eintrittsbereich und einem Austrittsbereich erstrecken. Dadurch, dass zumindest an einem Abschnitt des Filterelements ein elektrisches Potential anlegbar ist, kann das Filterelement als eine Gegenelektrode zu der Elektrode der Ionisierungselemente eingesetzt werden, und zudem können die in dem Filterelement abgelagerten Rußpartikel neutralisiert werden. Das Ionisierungselement, die Agglomerationseinrichtung und das Filterelement können somit ein stufenförmiges (unterschiedlich stark ausgeprägtes) elektrisches Feld ausbilden, wobei die angelegten elektrischen Spannungen an die jeweilige Abgassituation angepasst werden können.

Besonders bevorzugt handelt es sich bei dem Filterelement um einen so genannten offenen Nebenstromfilter, bei dem keine vollständig verschlossenen Strömungskanäle vorliegen. Das Filterelement ist vielmehr mit einem metallischen Vlies und metallischen Welllagen geformt, in denen Öffnungen, Leitstrukturen etc. vorgesehen sind. Die Leitstrukturen bilden dabei Strömungsengpässe in den Strömungspassagen, so dass die Verweilzeit bzw. Auftreffwahrscheinlichkeit für Rußpartikel im Inneren des Filterelements vergrößert wird. In diesem Zusammenhang wird auf die bekannten Patentveröffentlichungen der Anmelderin verwiesen, die zur näheren Charakterisierung des Filterelements und/oder deren Regeneration herangezogen werden können; insbesondere wird hierzu vollumfänglich auf die Beschreibung aus den folgenden Dokumenten Bezug genommen: WO-A-01/80978; WO-A-02/00326; WO-A-2005/099867; WO-A-2005/066469; WO-A-2006/136431; WO-A-2 007/140932.

Die Regeneration eines solchen Filterelements erfolgt dabei bevorzugt kontinuierlich mittels Stickstoffdioxid auf Basis der CRT-Methode ("continuous regeneration trap"). Hierzu kann der Vorrichtung z. B. ein Oxidationskatalysator vorgeschaltet sein, in dem (auch) Stickstoffmonoxid zu Stickstoffdioxid aufoxidiert wird, der dann mit dem Ruß in dem Filterelement reagiert. Zudem ist auch möglich, dass eine solche oxidativ wirkende Beschichtung in dem Filterelement selbst realisiert ist, entweder in einer Zone davon oder aber in allen Bereichen des Filterelements.

Bevorzugt weist das mindestens eine Innenelement der Agglomerationseinrichtung flächige Seiten (z. B. nach Art einer Außenhülle) und/oder Leitflächen auf, die sich insbesondere parallel zu dem Abgasstrom erstrecken und/oder dem Abgasstrom lokal wenigstens teilweise entgegenstehen, um diesen umzulenken. Es ist besonders bevorzugt, dass das Innenelement Aussparungen, insbesondere in den flächigen Seiten, zum Hindurchströmen des Abgases aufweist, wobei die Agglomeration der Rußpartikel zum größten Teil an den Oberflächen des Innenelements erfolgt. Die Ränder der Aussparung sind dabei bevorzugt so ausgeformt, dass die Abgasströmung so gelenkt wird, dass eine Anlagerung der Rußpartikel auf den Oberflächen des Innenelements erfolgt. Regelmäßig wird hierbei eine Vielzahl von Aussparungen vorgesehen sein, die für die meisten Anwendungsfälle im Wesentlichen gleich ausgeführt sein können. Es kann aber auch sinnvoll sein, die Größe, Form und/oder Lage zur Abgasströmung bei einem einzelnen oder mehreren Innenelementen der Agglomerationsvorrichtung zu variieren.

Erfindungsgemäß ist das mindestens eine Innenelement als ein Innenrohr ausgeführt. Das (bevorzugt zylindrische) Innenrohr ist dabei bevorzugt konzentrisch in dem (bevorzugt zylindrischen) Außenrohr angeordnet, wobei auch durch die Gestaltung und/oder Positionierung der Aussparungen im Innenrohr erreicht wird, dass ein Großteil des Abgases das Innenrohr von außen nach innen durch die Aussparungen durchströmt. Hierdurch wird eine vorteilhafte Ablagerung der Rußpartikel auf den (innen liegenden) Oberflächen des Innenrohrs erreicht.

Erfindungsgemäß weist das mindestens eine Innenelement eine Vielzahl von Leitblechen auf. Die Leitbleche sind so angeordnet, dass das Abgas umgelenkt wird, so dass vorteilhaft eine Ablagerung der Rußpartikel auf den Oberflächen der Leitbleche selbst und/oder auf der Oberfläche des Innenelements erfolgt. Zumindest ein Teil der Leitbleche kann benachbart zu Aussparungen angeordnet sein. Die Leitbleche können zudem mit einer zueinander verschiedenen Höhe und/oder Neigung zur Oberfläche des Innenelements ausgeführt sein. Außerdem ist bevorzugt, dass die Leitbleche einteilig mit dem Innenelement ausgeführt sind, also mit demselben Material gebildet sind (z. B. nach Art von Ausstanzungen bzw. Ausstülpungen).

Ferner ist es vorteilhaft, wenn das mindestens eine Innenelement eine Art Labyrinth bildet. Durch die labyrinthähnliche Anordnung der Leitbleche und/oder Aussparungen und/oder Innenrohr(e) wird die Oberfläche vergrößert, mit der die Partikel im Abgas während des Durchströmens der Agglomerationseinrichtung in Kontakt kommen. Hierdurch wiederum wird die Anzahl der an der Oberfläche abgelagerten Rußpartikel erhöht. Ein Labyrinth wird insbesondere durch eine Vielzahl quer zur Strömungsrichtung, in Strömungsrichtung versetzt angeordneter Leitbleche erreicht, wobei der gesamte Strömungsquerschnitt der Agglomerationseinrichtung von der Gesamtheit aller Leitbleche abgedeckt wird. Charakteristisch für ein solches Labyrinth kann sein, dass die Abgasströmung beim Durchströmen des mindestens einen Innenelements eine Vielzahl von Strömungsumlenkungen erfährt, wobei ggf. auch (wiederholte) Aufteilungen und Zusammenführungen einer Vielzahl von Teil-Abgasströmungen eintreten.

Darüber hinaus ist es vorteilhaft, wenn zumindest das Außenrohr oder das mindestens eine Innenelement eine Oberfläche mit Erhöhungen und Vertiefungen aufweist. Die Erhöhungen und Vertiefungen erstrecken sich bevorzugt im Wesentlichen quer zur Strömungsrichtung des Abgases, wodurch die Strömung nahe der Oberfläche zu Turbulenzen angeregt wird. Die Erhöhungen und/oder Vertiefungen können nach Art von Noppen, Dellen, Wellungen, etc. geformt sein und haben insbesondere ein Ausmaß, das mindestens ein Vielfaches der Materialstärke des Außenrohres und/oder des Innenelements entspricht. Durch die Turbulenzen entstehen Bereiche an der Oberfläche der Agglomerationseinrichtung, an denen sich bevorzugt Rußpartikel ablagern und agglomerieren. Insbesondere bei einer Änderung der Strömungssituation werden die agglomerierten Rußpartikel durch den Abgasstrom von ihrer Anlagerungsstelle losgelöst.

Ferner ist bevorzugt, dass die Erhöhungen und Vertiefungen zumindest mit Amplitude oder Abstand in Strömungsrichtung variieren. Der Abstand der Erhöhungen und Vertiefungen wird dabei in Strömungsrichtung gemessen und die Amplitude quer zur Strömungsrichtung. Durch eine solche Ausformung wird ein besonders hoher Anteil von Rußpartikel in jeder Strömungssituation agglomeriert.

Bei einer weiteren Ausführungsform ist vorgesehen, dass die Agglomerationseinrichtung eine Kühlvorrichtung aufweist. Durch eine Kühlung der Agglomerationseinrichtung wird der Anteil der sich an der Agglomerationseinrichtung anlagernden und im Folgenden agglomerierenden Rußpartikel erhöht. Die Kühlvorrichtung ist bevorzugt außen an der Agglomerationseinrichtung und kann durch ein Umleiten von Kühlluft und/oder durch Peltierelemente und/oder ein flüssiges Kühlmedium realisiert sein.

Um das Loslösen der agglomerierten Rußpartikel von den Oberflächen der Agglomerationseinrichtung zu fördern, wird auch vorgeschlagen, dass die Agglomerationseinrichtung eine Vibrationsvorrichtung umfasst. Eine solche Vibrationsvorrichtung kann bspw. außerhalb der Abgasströmung an der Agglomerationseinrichtung angebracht sein und diese durch geeignete Mittel wie bspw. Piezoelemente zu Schwingungen anregen.

Bevorzugt ist insbesondere auch ein Kraftfahrzeug, ausweisend eine Verbrennungskraftmaschine und ein Abgassystem, wobei eine Vorrichtung der hier erfindungsgemäß beschriebenen Art in das Abgassystem integriert ist. Hierfür sind insbesondere geeignete Spannungsquellen, elektrische Verbindungsleitungen, Kontrolleinheiten, etc. vorgesehen.

Die Erfindung sowie das technische Umfeld werden nachfolgend anhand der Figuren beispielhaft erläutert. Es ist darauf hinzuweisen, dass die Figuren besonders bevorzugte Ausführungsvarianten der Erfindung zeigen, diese Erfindung jedoch nicht darauf beschränkt ist. Es zeigen schematisch:
- Fig. 1:: eine Ausführungsform der erfindungsgemäßen Vorrichtung,
- Fig. 2:: eine Ausführungsform der Agglomerationseinrichtung,
- Fig. 3:: eine weitere Ausführungsform der Agglomerationseinrichtung,
- Fig. 4:: noch eine weitere Ausführungsform der Agglomerationseinrichtung, und
- Fig. 5:: eine Integrationsvariante der Vorrichtung in ein Kraftfahrzeug.

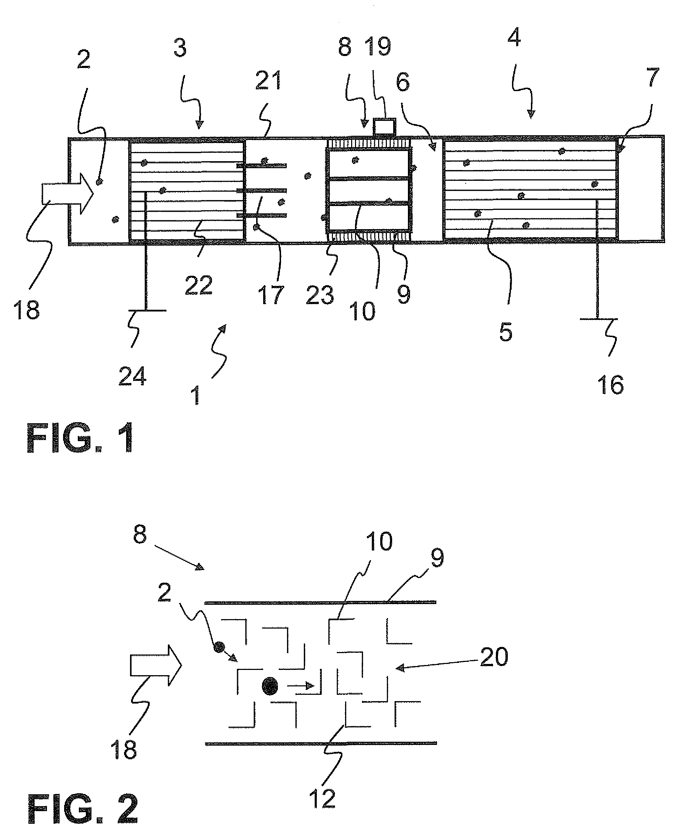

Fig. 1 zeigt schematisch eine Ausführungsform der erfindungsgemäßen Vorrichtung 1 zur Behandlung von Rußpartikel 2 enthaltendem Abgas. In einer Abgasleitung 21 sind in Strömungsrichtung 18 ein Ionisierungselement 3, eine Agglomerationseinrichtung 8 und ein Filterelement 4 angeordnet. Das Ionisierungselement 3 umfasst einen elektrisch leitfähigen Wabenkörper 22 mit einer Vielzahl daran angeordneter Elektroden 17, die über einen elektrischen Ionisierungselementanschluss 24 mit einer Spannung beaufschlagbar sind. Die Agglomerationseinrichtung 8 weist ein Innenelement 10 und ein Außenrohr 9 auf, wobei das Außenrohr 9 von einer Kühlvorrichtung 23 umgeben ist. Ferner weist die Agglomerationseinrichtung 8 eine Vibrationsvorrichtung 19 auf. Das Filterelement 4 weist eine Mehrzahl von Kanälen 5 auf, die für das Abgas durchströmbar sind und sich zwischen einem Eintrittsbereich 6 und einem Austrittsbereich 7 erstrecken. Das Filterelement 4 ist über einen elektrischen Filterelementanschluss 16 mit einem elektrischen Potential beaufschlagbar. Die Abgasleitung 21 ist in einer Abgasanlage eines Kraftfahrzeugs angeordnet.

Im Betrieb durchströmt das Rußpartikel 2 enthaltende Abgas zunächst das Ionisierungselement 3, wobei durch den durchströmbare Kanäle aufweisenden Wabenkörper 22 der Abgasstrom vergleichmäßigt wird. Im Bereich zwischen dem Ionisierungselement 3 und der Agglomerationseinrichtung 8 werden die Rußpartikel 2 in einer Corona-Entladung ausgehend von den Elektroden 17 ionisiert. Die geladenen Rußpartikel 2 gelangen mit der Abgasströmung und mit dem elektrischen Potential zwischen den Elektroden 17 und der Agglomerationseinrichtung 8 zur Agglomerationseinrichtung 8. Durch mechanische und elektrostatische Kräfte lagern sich die geladenen Rußpartikel 2 an der Oberfläche 13 der Agglomerationseinrichtung 8 ab. Durch die Strömungsführung in der Agglomerationseinrichtung 8 wird die Anzahl der angelagerten Rußpartikel 2 erhöht. Die agglomerierten Rußpartikel 2 werden von dem nachfolgenden Abgas losgelöst und gelangen in das Filterelement 4, wobei das Loslösen durch von der Vibrationsvorrichtung 19 erzeugte Vibrationen verursacht werden kann. Durch das Anlegen eines elektrischen Potentials über den elektrischen Filterelementanschluss 16 an das Filterelement 4 wird zum einen der Abfluss der Partikelagglomerate von der Agglomerationseinrichtung 8 zu dem Filterelement 4 befördert und zum anderen wird die Ablagerung der geladenen agglomerierten Rußpartikel 2 im Filterelement 4 erhöht.

Fig. 2 zeigt schematisch eine Querschnittsdarstellung einer Ausführungsform der Agglomerationseinrichtung 8. Die Agglomerationseinrichtung 8 umfasst ein Außenrohr 9 und Innenelemente 10. Die Innenelemente 10 werden durch Leitbleche 12 gebildet, die als ein Labyrinth 20 angeordnet sind. Die sich in zwei Dimensionen erstreckenden Oberflächen der Leitbleche 12 bilden jeweils eine flächige Seite aus. Das in Strömungsrichtung 18 einströmende, geladene Rußpartikel enthaltende Abgas wird durch die Leitbleche 12 umgelenkt, wobei aufgrund der höheren Masse die Rußpartikel dieser Umlenkung nicht unbedingt folgen können und somit an die Oberfläche der Leitbleche 12 gelangen, wo sie sich ablagern und ggf. mit weiteren Rußpartikeln agglomerieren. Die so agglomerierten Rußpartikel werden wiederum von dem vorbeiströmenden Abgas von der Anlagerungsstelle losgelöst, wenn sie eine bestimmte Gesamtgröße und damit einen bestimmten Gesamtströmungswiderstand haben. Durch die labyrinthartige Anordnung der Leitbleche 12 wird somit die Agglomerationsrate der Rußpartikel 2 erhöht.

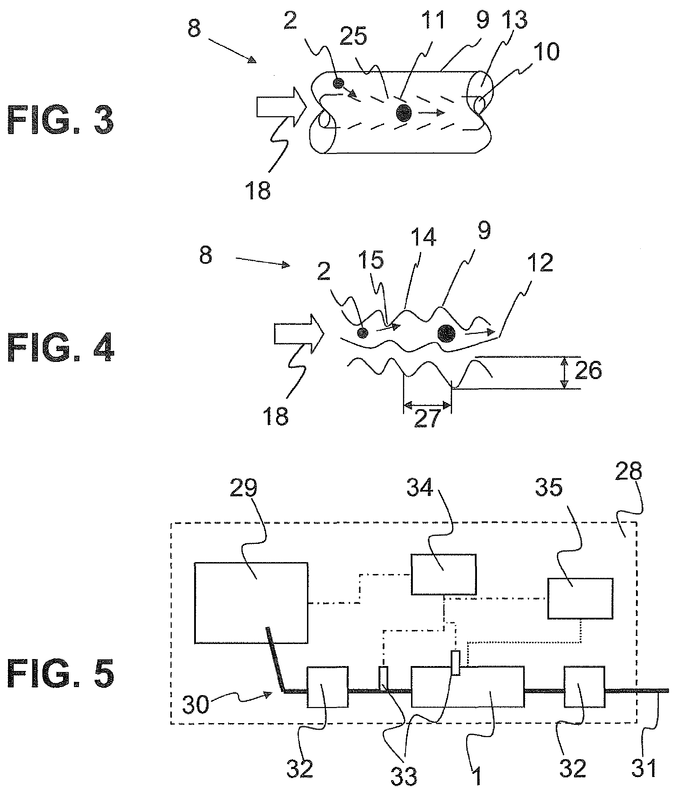

Fig. 3 zeigt schematisch eine weitere vorteilhafte Ausführungsform der Agglomerationseinrichtung 8 mit einem Außenrohr 9 und einem als Innenrohr 11 ausgeführten Innenelement 10. Innenseite und Außenseite des Innenrohrs 11 bilden jeweils eine flächige Seite aus. Das Innenrohr 11 weist Aussparungen 25 auf, durch die das Rußpartikel enthaltende Abgas strömen kann. Die Aussparungen 25 sind so geformt, dass das Abgas bevorzugt von einer Außenseite des Innenrohrs 11 in das Innere des Innenrohrs 11 strömt. Dadurch lagern sich bevorzugt die Rußpartikel 2 an den Oberflächen des Innenrohrs 11 ab.

Fig. 4 zeigt schematisch noch eine weitere Ausführungsform der Agglomerationseinrichtung 8. Das Außenrohr 9 und das Innenelement 10 weisen Erhöhungen 14 und Vertiefungen 15 auf. Durch die Erhöhungen 14 und Vertiefungen 15 wird eine turbulente Abgasströmung erzeugt, durch die die Rußpartikel 2 in die Nähe der Oberflächen 13 des Außenrohrs 9 und des Innenelements 10 gelangen, wo die Rußpartikel 2 sich anlagern und ggf. agglomerieren können. Hier ist auch veranschaulicht, dass die Amplitude 26 und/oder der Abstand 27 der Erhöhungen 14 und/oder Vertiefungen 15 zueinander verschieden ausgeführt sein können, insbesondere in der Art, dass in Strömungsrichtung 18 die Amplitude 26 und/oder der Abstand 27 vergrößert wird. Die gewölbten Oberflächen des Innenelements 10 bilden jeweils eine flächige Seite aus.

Fig. 5. zeigt schematisch ein Kraftfahrzeug 28 mit einer Verbrennungskraftmaschine 29. Das in der Verbrennungskraftmaschine 29 während des Betriebes des Kraftfahrzeuges 28 erzeugte Abgas samt den Rußpartikeln wird dann durch ein Abgassystem 30 hindurchgeführt. Das Abgassystem 30 wird von einer Abgasleitung 21 gebildet, in dem neben mehreren Abgasbehandlungseinheiten 32 (z. B. Katalysatoren, Adsorber, Strömungsmischer, etc.) auch die erfindungsgemäße Vorrichtung 1 vorgesehen ist. Der Betrieb der Vorrichtung 1 erfolgt mit einer Spannungsquelle 35, die von einer Kontrolleinheit 34, z. B. auch unter Einschaltung von Sensoren 33 des Abgassystems 30, geregelt wird.

Mit der vorliegenden Erfindung wird durch eine Erhöhung der Agglomerationsrate der Rußpartikel 2 die Filterleistung einer Abgasanlage einer Verbrennungskraftmaschine erhöht.

### Bezugszeichenliste

- 1: Vorrichtung
- 2: Rußpartikel
- 3: Ionisierungselement
- 4: Filterelement
- 5: Kanäle
- 6: Eintrittsbereich
- 7: Austrittsbereich
- 8: Agglomerationseinrichtung
- 9: Außenrohr
- 10: Innenelement
- 11: Innenrohr
- 12: Leitbleche
- 13: Oberfläche
- 14: Erhöhung
- 15: Vertiefung
- 16: elektrischer Filterelementanschluss
- 17: Elektroden
- 18: Strömungsrichtung
- 19: Vibrationsvorrichtung
- 20: Labyrinth
- 21: Abgasleitung
- 22: Wabenkörper
- 23: Kühlvorrichtung
- 24: elektrischer Ionisierungselementanschluss
- 25: Aussparung
- 26: Amplitude
- 27: Abstand
- 28: Kraftfahrzeug
- 29: Verbrennungskraftmaschine
- 30: Abgassystem
- 31: Abgasleitung
- 32: Abgasbehandlungseinheit
- 33: Sensor
- 34: Kontrolleinheit
- 35: Spannungsquelle

## Patentansprüche

1. Vorrichtung (1) zur Behandlung von Rußpartikel (2) enthaltendem Abgas, umfassend zumindest
- mindestens ein Ionisierungselement (3) zur Ionisierung von Rußpartikeln (2),
- mindestens ein Filterelement (4), wobei an mindestens einem Abschnitt des Filterelements (4) ein elektrisches Potential anlegbar ist,
- mindestens eine Agglomerationseinrichtung (8) zur zumindest teilweisen Agglomeration elektrisch aufgeladener Rußpartikel (2), die zwischen dem Ionisierungselement (3) und dem Filterelement (4) angeordnet ist, wobei die Agglomerationseinrichtung (8) zumindest ein Außenrohr (9) und mindestens ein Innenelement (10) aufweist, wobei das Außenrohr (9) die Abgasströmung nach außen begrenzt und nur auf seiner Innenseite vom Abgas durchströmbar ist, wobei das Innenelement (10) zumindest abschnittsweise von mehreren Seiten von dem Abgas umströmbar ist und von mindestens einem Element der folgenden Gruppe gebildet wird:
- ein Innenrohr (11), und
- eine Vielzahl von Leitblechen (12), die so angeordnet sind, dass das Abgas umgelenkt wird.

2. Vorrichtung (1) nach Patentanspruch 1, wobei das Innenelement (10) Aussparungen (25) zum Hindurchströmen des Abgases aufweist, und die Agglomeration zum größten Teil an dem mindestens einen Innenelement (10) erfolgt.

3. Vorrichtung (1) nach einem der vorhergehenden Patentansprüche, wobei das mindestens eine Innenelement (10) ein Labyrinth (20) bildet.

4. Vorrichtung (1) nach einem der vorhergehenden Patentansprüche, wobei zumindest das Außenrohr (9) oder das mindestens eine Innenelement (10) eine Oberfläche (13) mit Erhöhungen (14) und Vertiefungen (15) aufweist.

5. Vorrichtung (1) nach Patentanspruch 4, wobei die Erhöhungen (14) und Vertiefungen (15) zumindest mit Amplitude (26) oder Abstand (27) in Strömungsrichtung (18) variieren.

6. Vorrichtung (1) nach einem der vorhergehenden Patentansprüche, wobei die Agglomerationseinrichtung (8) eine Kühlvorrichtung (23) aufweist.

7. Vorrichtung (1) nach einem der vorhergehenden Patentansprüche, wobei die Agglomerationseinrichtung (8) eine Vibrationsvorrichtung (19) umfasst.

8. Kraftfahrzeug (28), aufweisend eine Verbrennungskraftmaschine (29) und ein Abgassystem (30), wobei eine Vorrichtung (1) nach einem der vorhergehenden Patentansprüche in das Abgassystem (30) integriert ist.

## Claims

1. Device (1) for the treatment of exhaust gas containing soot particles (2), comprising at least
- at least one ionization element (3) for the ionization of soot particles (2),
- at least one filter element (4), wherein an electrical potential can be applied to at least one portion of the filter element (4),
- at least one agglomeration unit (8) for the at least partial agglomeration of electrically charged soot particles (2), which agglomeration unit is arranged between the ionization element (3) and the filter element (4), wherein the agglomeration unit (8) has at least one outer pipe (9) and at least one inner element (10), wherein the outer pipe (9) delimits the exhaust-gas flow toward the outside and can be traversed by flow of the exhaust gas only on its inner side, wherein the exhaust gas can flow around the inner element (10), at least in sections, on several sides and said inner element is formed by at least one element of the following group:
- an inner pipe (11), and
- a multiplicity of guide plates (12) that are arranged such that the exhaust gas is diverted.

2. Device (1) according to patent Claim 1, wherein the inner element (10) has cutouts (25) for the exhaust gas to flow through, and the agglomeration takes place predominantly on the at least one inner element (10).

3. Device (1) according to one of the preceding patent claims, wherein the at least one inner element (10) forms a labyrinth (20).

4. Device (1) according to one of the preceding patent claims, wherein at least the outer pipe (9) or the at least one inner element (10) has a surface (13) with elevations (14) and depressions (15).

5. Device (1) according to patent Claim 4, wherein the elevations (14) and depressions (15) vary at least in terms of amplitude (26) or spacing (27) in a flow direction (18).

6. Device (1) according to one of the preceding patent claims, wherein the agglomeration unit (8) has a cooling device (23).

7. Device (1) according to one of the preceding patent claims, wherein the agglomeration unit (8) comprises a vibration device (19).

8. Motor vehicle (28), having an internal combustion engine (29) and an exhaust system (30), wherein a device (1) according to one of the preceding patent claims is integrated into the exhaust system (30).

## Revendications

1. Dispositif (1) pour le traitement de gaz d'échappement contenant des particules de suie (2), comprenant au moins
- au moins un élément d'ionisation (3) pour ioniser des particules de suie (2),
- au moins un élément de filtre (4), un potentiel électrique pouvant être appliqué à au moins une partie de l'élément de filtre (4),
- au moins un dispositif d'agglomération (8) pour agglomérer au moins en partie des particules de suie (2) chargées électriquement, lequel dispositif d'agglomération est disposé entre l'élément d'ionisation (3) et l'élément de filtre (4), le dispositif d'agglomération (8) présentant au moins un tube extérieur (9) et au moins un élément intérieur (10), le tube extérieur (9) limitant vers l'extérieur l'écoulement de gaz d'échappement et pouvant être parcouru par du gaz d'échappement seulement sur son côté intérieur, l'élément intérieur (10) pouvant être entouré par la circulation de gaz d'échappement au moins en partie sur plusieurs côtés et étant formé par au moins un élément parmi le groupe suivant :
- un tube intérieur (11), et
- une pluralité de tôles directrices (12) qui sont disposées de manière à dévier le gaz d'échappement.

2. Dispositif (1) selon la revendication 1, dans laquelle l'élément intérieur (10) présente des évidements (25) pour l'écoulement du gaz d'échappement, et l'agglomération s'effectue pour la majeure partie au niveau de l'au moins un élément intérieur (10).

3. Dispositif (1) selon l'une quelconque des revendications précédentes, dans lequel l'au moins un élément intérieur (10) forme un labyrinthe (20).

4. Dispositif (1) selon l'une quelconque des revendications précédentes, dans lequel au moins le tube extérieur (9) ou l'au moins un élément intérieur (10) présente une surface (13) avec des rehaussements (14) et des renfoncements (15).

5. Dispositif (1) selon la revendication 4, dans lequel les rehaussements (14) et les renfoncements (15) varient au moins en amplitude (26) ou en espacement (27) dans la direction périphérique (18).

6. Dispositif (1) selon l'une quelconque des revendications précédentes, dans lequel le dispositif d'agglomération (8) présente un dispositif de refroidissement (23).

7. Dispositif (1) selon l'une quelconque des revendications précédentes, dans lequel le dispositif d'agglomération (8) comprend un dispositif de vibrations (19).

8. Véhicule automobile (28), présentant un moteur à combustion interne (29) et un système de gaz d'échappement (30), un dispositif (1) selon l'une quelconque des revendications précédentes étant intégré dans le système de gaz d'échappement (30).
